# EUROPEAN PATENT APPLICATION

(11) **EP 4 851 781 A1**
(43) Date of publication of application: **09.12.2026**
(21) Application number: 25305834.1
(22) Date of filing: 08.06.2025
(51) Int. Cl.: G06F 7/58

(54) **SYSTEMS AND METHODS FOR PROVIDING RANDOM BYTES GENERATED USING A QUANTUM RANDOM NUMBER GENERATOR**

(71) Applicant: OVH, 59100 Roubaix (FR)
(72) Inventor: MARCHAND, Guillaume, 59110 La Madeleine (FR); HASSANI, Aymany Mohamed, 91400 Orsay (FR); CHAIX, Gabriel, 28410 Boutigny Prouais (FR)
(74) Representative: BCF Global

(57) **Abstract**

The present disclosure relates to a computer-implemented method for generating and providing random bytes using a quantum random number generator. The method involves requesting and receiving a random byte payload along with an associated payload identification number from the quantum random number generator. This data is stored in a database. Upon receiving a request for random bytes of a specified length, a portion of the random byte payload matching the specified length is transmitted, accompanied by a transaction identification number corresponding to the request. The method further includes storing in the database an indication linking the transaction identification number to the payload identification number, ensuring traceability and integrity of the random byte distribution process.

## Description

### FIELD

The present technology relates to systems and methods for providing random bytes generated using a quantum random number generator.

### BACKGROUND

Random numbers play a crucial role in various fields, including cryptography, simulations, gaming, and scientific research. In cryptography, random numbers are essential for generating secure encryption keys, ensuring the confidentiality and integrity of data. Simulations, such as weather forecasting and financial modeling, rely on random numbers to produce realistic and unpredictable outcomes. In gaming, particularly online casinos, random numbers ensure fair play by generating unpredictable results. The importance of random numbers extends to cybersecurity, where they are leveraged to protect systems from unauthorized access by creating unpredictable passwords and encryption keys.

Quantum Random Number Generators (QRNGs) leverage the inherent unpredictability of quantum mechanics to produce random numbers. Unlike classical random number generators, which may rely on deterministic algorithms or physical processes that can be influenced by external factors, QRNGs exploit quantum phenomena such as the random fluctuations of the vacuum or the behavior of photons. This results in high-quality random numbers that may be truly random.

Despite their advantages, QRNGs face several challenges. One significant issue is the complexity and cost of implementing quantum technology, which can be prohibitive for widespread adoption. Quantum machines may include complex and expensive equipment and may be configured to function properly under precise conditions. This may make QRNGs less accessible and may limit their deployment to specialized environments. Additionally, QRNGs can take a considerable amount of time to generate random numbers. This can lead to delays and inefficiencies, particularly in applications configured to rapidly access random numbers. These challenges underscore the necessity for developing technologies that can leverage QRNGs efficiently and enhance their practical usability.

### SUMMARY

According to a first broad aspect of the present technology, there is provided a method for providing a plurality of random bytes generated using a quantum random number generator, the method comprising: requesting a random byte payload from the quantum random number generator; receiving the random byte payload and a payload identification number associated with the random byte payload; storing the random byte payload and the payload identification number in a database; receiving a request for random bytes having a specified length; transmitting a portion of the random byte payload having the specified length and a transaction identification number corresponding to the request for the random bytes; and storing, in the database, an indication that the transaction identification number is associated with the payload identification number.

In some implementations of the method, the random byte payload is requested prior to receiving the request for the random bytes.

In some implementations of the method, the method further comprises encrypting the random byte payload prior to storing the random byte payload.

In some implementations of the method, the method further comprises dividing the random byte payload into a plurality of chunks prior to storing the random byte payload.

In some implementations of the method, the method further comprises concatenating one or more chunks of the plurality of chunks to form the portion of the random byte payload having the specified length.

In some implementations of the method, the method further comprises, after transmitting the portion of the random byte payload, deleting the portion of the random byte payload from the database.

In some implementations of the method, the method further comprises: generating a signature associated with the portion of the random byte payload; and transmitting the signature with the random byte payload.

In some implementations of the method, the method further comprises, after receiving the request for the random bytes: creating a transaction information register corresponding to the request; and storing the transaction information register in the database, wherein the transaction information register comprises the transaction identification number, a client identification number, the specified length, or the signature.

In some implementations of the method, the method further comprises receiving, from the quantum random number generator, metadata associated with the random byte payload.

In some implementations of the method, the metadata comprises: an indication of a minimum entropy value in the quantum random number generator or a value representing a measure of quantum entanglement in the quantum random number generator.

In some implementations of the method, the database comprises a first database storing the metadata and the payload identification number, and a second database storing the random byte payload and the payload identification number.

In some implementations of the method, the first database is an SQL database and the second database is a NoSQL database.

In some implementations of the method, the method further comprises: receiving a request comprising the transaction identification number; and retrieving, from the database and using the transaction identification number, the payload identification number.

According to another broad aspect of the present technology, there is provided a non-transitory computer readable medium comprising instructions which upon being executed by at least one processor cause execution of the method for providing a plurality of random bytes generated using a quantum random number generator.

According to another broad aspect of the present technology, there is provided a system comprising at least one processor and memory comprising instructions which, upon being executed by the at least one processor, cause the system to perform the method for providing a plurality of random bytes generated using a quantum random number generator.

In the context of the present specification, unless expressly provided otherwise, the words "first", "second", "third", etc. have been used as adjectives only for the purpose of allowing for distinction between the nouns that they modify from one another, and not for the purpose of describing any particular relationship between those nouns.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of embodiments of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a diagram of an example computing environment in accordance with various embodiments of the present technology;
Figure 2 is a diagram of a system for providing a plurality of random bytes generated using a quantum random number generator in accordance with various embodiments of the present technology;
Figure 3 is a flow diagram of a method for storing random bytes generated using a quantum random number generator in accordance with various embodiments of the present technology; and
Figure 4 is a flow diagram of a method for providing a plurality of random bytes generated using a quantum random number generator in accordance with various embodiments of the present technology.

It should be noted that, unless otherwise explicitly specified herein, the drawings are not to scale.

### DETAILED DESCRIPTION

Quantum Random Number Generators (QRNGs) exploit the inherent unpredictability of quantum phenomena, such as photon path selection, phase noise, or quantum vacuum fluctuations, to generate truly random numbers. These processes may involve complex quantum measurements and substantial post-processing to ensure the quality and uniformity of the output, which poses significant challenges for practical deployment.

For various physical and hardware reasons, QRNGs may take a relatively long amount of time to produce sufficiently large quantities of usable random data. As a result, QRNGs might not be suitable for applications that require low-latency or real-time access to random numbers, including interactive systems, adaptive algorithms, and embedded systems operating under strict timing constraints. When random numbers generated by a QRNG are not available due to the amount of time it takes to generate those random numbers, less secure fallback methods may be used to provide random numbers.

The methods and/or systems described herein may address the technical challenges of delivering random byte sequences (referred to herein as a "random byte payload") generated by QRNGs in real-time, or near real-time, upon request. Unlike conventional systems that generate random numbers on demand, often introducing latency, described herein is a database of random byte payloads that have been previously generated and are available for use. This proactive storage strategy can decouple the QRNG's generation latency from the user-facing request flow, which can provide immediate access to high-entropy quantum randomness when a request is received. Rather than waiting for the random byte payloads to be generated by a QRNG, which can cause significant delays, the random byte payloads may have been previously generated, stored in a database, and can be retrieved from the database when requested.

Once a request for random bytes is received, a portion of a random byte payload corresponding to the request may be retrieved. A transaction identification number may be generated for the request. This portion of the random byte payload may be assembled from one or more stored chunks of the random byte payload. The portion of the random byte payload may be signed to ensure authenticity and/or integrity thereof. Metadata related to the request, including the transaction identification number, client ID, and/or request parameters, may be stored in a database.

The random byte payloads may be stored in one database and the metadata and/or other data relating to the random byte payloads may be stored in a different database. The separation of metadata and random byte payload storage may be leveraged to support parallel processing, fast indexing, and/or efficient retrieval. Once a portion of a random byte payload has been transmitted, this portion may be deleted from the database storing the random byte payloads. This may prevent the portion of the random byte payload from being reused.

Throughout this description, terms such as "bits," "bytes," and "random numbers" are used interchangeably. A bit is typically the smallest unit of data, a byte typically consists of eight bits. A random number may be a numerical value represented by one or more bits and/or bytes. A person skilled in the art will understand how to convert between these representations as needed. For example, a sequence of random bits can be grouped into bytes, which can then be interpreted as random numbers according to a specified format or encoding.

The examples and conditional language recited herein are principally intended to aid the reader in understanding the principles of the present technology and not to limit its scope to such specifically recited examples and conditions. It will be appreciated that those skilled in the art may devise various arrangements which, although not explicitly described or shown herein, nonetheless embody the principles of the present technology and are included within its spirit and scope.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and/or implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views embodying the principles of the present technology. Similarly, it will be appreciated that any flowcharts, flow diagrams, state transition diagrams, pseudo-code, and the like represent various processes which may be substantially represented in computer-readable media and so executed by a computer or processor, whether or not such computer or processor is explicitly shown.

The functions of the various elements shown in the figures, including any functional block labeled as a "processor," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some implementations of the present technology, the processor may be a general-purpose processor, such as a central processing unit (CPU) or a processor dedicated to a specific purpose, such as a digital signal processor (DSP) or quantum processing unit (QPU). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof.

In the context of the present specification, unless expressly provided otherwise, a computer system may refer, but is not limited to, an "electronic device," an "operation system," a "system," a "computer-based system," a "controller unit," a "monitoring device," a "control device," and/or any combination thereof appropriate to the relevant task at hand.

In the context of the present specification, unless expressly provided otherwise, the expression "computer-readable medium" and "memory" are intended to include media of any nature and kind whatsoever, non-limiting examples of which include RAM, ROM, disks (CD-ROMs, DVDs, floppy disks, hard disk drives, etc.), USB keys, flash memory cards, solid state-drives, and tape drives. Still in the context of the present specification, "a" computer-readable medium and "the" computer-readable medium should not be construed as being the same computer-readable medium. To the contrary, and whenever appropriate, "a" computer-readable medium and "the" computer-readable medium may also be construed as a first computer-readable medium and a second computer-readable medium.

In the context of the present specification, unless expressly provided otherwise, the words "first," "second," "third," etc. have been used as adjectives only for the purpose of allowing for distinction between the nouns that they modify from one another, and not for the purpose of describing any particular relationship between those nouns.

With these fundamentals in place, we will now consider some non-limiting examples of the present technology.

### COMPUTING ENVIRONMENT

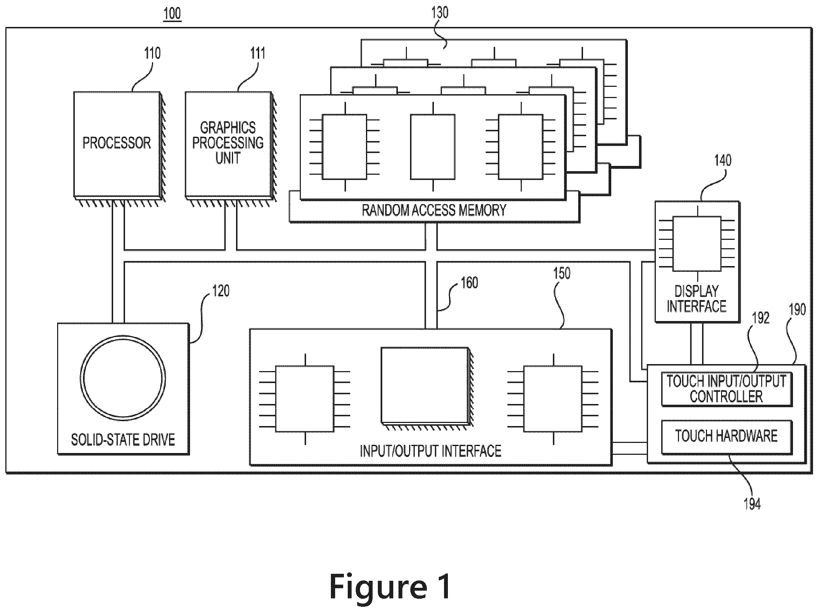

Figure 1 illustrates a computing environment 100, which may be used to implement and/or execute any of the methods described herein. In some embodiments, the computing environment 100 may be implemented by any of a conventional personal computer, a network device, and/or an electronic device (such as, but not limited to, a mobile device, a tablet device, a server, a controller unit, a control device, etc.), and/or any combination thereof appropriate to the relevant task at hand.

In some embodiments, the computing environment 100 comprises various hardware components including one or more single or multi-core processors collectively represented by processor 110, a solid-state drive 120, a random access memory 130, and an input/output interface 150. The computing environment 100 may be a computer specifically designed to operate a machine learning algorithm (MLA). The computing environment 100 may be a generic computer system.

In some embodiments, the computing environment 100 may also be a subsystem of one of the above-listed systems. In some other embodiments, the computing environment 100 may be an "off-the-shelf" generic computer system. In some embodiments, the computing environment 100 may also be distributed amongst multiple systems. The computing environment 100 may also be specifically dedicated to the implementation of the present technology. As a person in the art of the present technology may appreciate, multiple variations as to how the computing environment 100 is implemented may be envisioned without departing from the scope of the present technology.

Those skilled in the art will appreciate that processor 110 is generally representative of a processing capability. In some embodiments, in place of or in addition to one or more conventional Central Processing Units (CPUs), one or more specialized processing cores may be provided. For example, one or more Graphic Processing Units 111 (GPUs), Quantum Processing Units (QPUs), Tensor Processing Units (TPUs), and/or other so-called accelerated processors (or processing accelerators) may be provided in addition to or in place of one or more CPUs.

System memory will typically include random access memory 130 but is more generally intended to encompass any type of non-transitory system memory such as static random access memory (SRAM), dynamic random access memory (DRAM), synchronous DRAM (SDRAM), read-only memory (ROM), or a combination thereof. Solid-state drive 120 is shown as an example of a mass storage device, but more generally such mass storage may comprise any type of non-transitory storage device configured to store data, programs, and other information, and to make the data, programs, and other information accessible via a system bus 160. For example, mass storage may comprise one or more of a solid state drive, hard disk drive, a magnetic disk drive, and/or an optical disk drive.

Communication between the various components of the computing environment 100 may be enabled by a system bus 160 comprising one or more internal and/or external buses (e.g., a PCI bus, universal serial bus, IEEE 1394 "Firewire" bus, SCSI bus, Serial-ATA bus, ARINC bus, etc.), to which the various hardware components are electronically coupled.

The input/output interface 150 may enable networking capabilities such as wired or wireless network communications. As an example, the input/output interface 150 may comprise a networking interface such as, but not limited to, a network port, a network socket, a network interface controller and the like. Multiple examples of how the networking interface may be implemented will become apparent to the person skilled in the art of the present technology. For example the networking interface may implement specific physical layer and data link layer standards such as Ethernet, Fibre Channel, Wi-Fi, Token Ring or Serial communication protocols. The specific physical layer and the data link layer may provide a base for a full network protocol stack, allowing communication among small groups of computers on the same local area network (LAN) and large-scale network communications through routable protocols, such as Internet Protocol (IP).

The input/output interface 150 may be coupled to a touchscreen 190 and/or to the system bus 160. The touchscreen 190 may be part of the display. In some embodiments, the touchscreen 190 is the display. The touchscreen 190 may equally be referred to as a screen 190. In the embodiments illustrated in Figure 1, the touchscreen 190 comprises touch hardware 194 (e.g., pressure-sensitive cells embedded in a layer of a display allowing detection of a physical interaction between a user and the display) and a touch input/output controller 192 allowing communication with the display interface 140 and/or the system bus 160. In some embodiments, the input/output interface 150 may be connected to a keyboard (not shown), a mouse (not shown) or a trackpad (not shown) allowing the user to interact with the computing environment 100 in addition to or instead of the touchscreen 190.

According to some implementations of the present technology, the solid-state drive 120 stores program instructions suitable for being loaded into the random access memory 130 and executed by the processor 110 for executing acts of one or more methods described herein. For example, at least some of the program instructions may be part of a library or an application.

The computing environment 100 may include any number of the illustrated components, which may be integrated in any number of physical devices. The computing environment 100 may be implemented as a cloud environment and/or a distributed architecture. The computing environment 100 may include multiple servers, which may be in different physical locations and/or on different networks. The computing environment 100 may include virtualized systems. The methods described herein, or any parts of the methods described herein, may be executed on multiple systems as distributed applications.

### THE QUANTUM SYSTEM

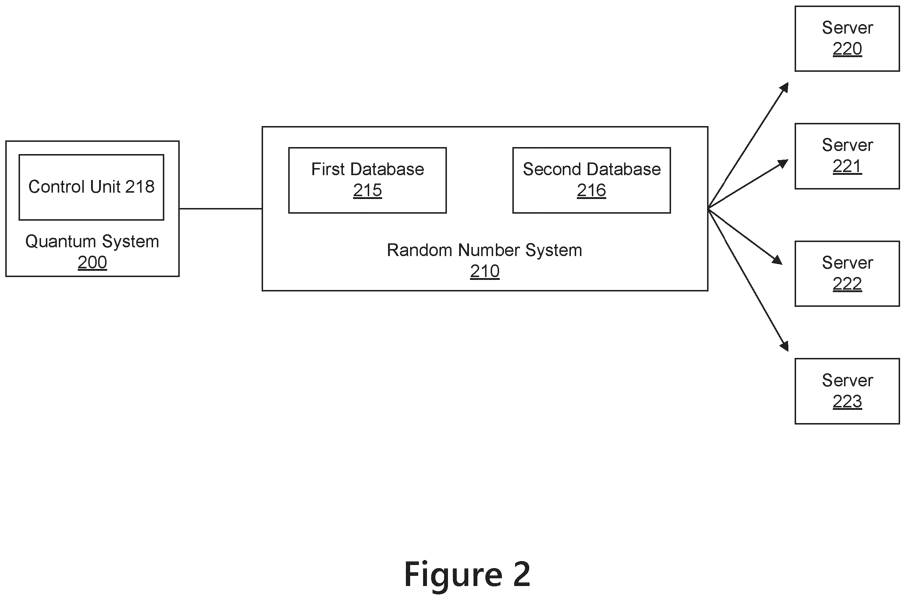

Figure 2 is a diagram of a random number system 210 in accordance with embodiments of the present technology. The random number system 210 may include and/or be in communication with a quantum system 200 that is configured to generate random byte payloads. Various different types of quantum computing devices, using different technologies to provide qubits, can be used to generate random byte payloads. The quantum system 200 may be any suitable type of quantum computing device and/or may include multiple different types of quantum computing devices.

The quantum system 200 may be used as an entropy source. The quantum system 200 may have any number of qubits, such as one qubit or two qubits. The quantum system 200 may include a photonic subsystem. The quantum system 200 can include any type of qubit source system.

The quantum system 200 may comprise a control unit 218. The control unit 218 may control the photonic subsystem. The control unit 218 may control a laser of the photonic subsystem. The control unit 218 may serve as a hub for principal components. The control unit 218 may be a server. The control unit 218 may provide a visual interface. The visual interface may allow an operator to design linear optical circuits, simulate single photon sources, and/or manage complex quantum circuits. The control unit 218 may include a database and/or any other data structure for storing data. The database may be used to store task results and/or system logs.

The photonic subsystem of the quantum system 200 may include a laser source. The laser source may be a pulsed laser operating at a frequency of approximately 80 MHz. Each pulse may deliver energy in the range of 1 to 100 joules, with a typical value between 10 and 13 joules. The laser may be powered by a 230V distribution unit. The laser may be employed to optically excite a quantum dot. The excitation process may initiate quantum phenomena that are inherently unpredictable and suitable for high-entropy random number generation. The excitation process may be used to generate the random byte payloads.

The photonic subsystem may comprise a shaping device for adjusting the shape of the laser beam. The shaping device may transform a Gaussian beam into a flat profile for applications requiring uniform irradiance distribution, essential for precise cutting or optical processing. The shaping device may be a QShaper provided by Quandela.

The photonic subsystem may comprise a light guide, such as an optical fiber, to guide light along a single path through its core. Using a light guide may reduce modal dispersion and/or provide fast and reliable data transmission in the quantum system.

The photonic subsystem may comprise a demultiplexer to direct the excitation laser, collect single photons, and/or passively split these photons into two separate paths in order to manipulate two qubits. The photonic subsystem may act as a photonic router. The photonic subsystem may be electronically controlled to distribute photons across the various processing channels.

The quantum system 200 may comprise a Photonic Integrated Circuit (PIC). The PIC may translate a quantum algorithm, which may have been written with the visual interface, into physical operations on photons. The PIC may integrate components such as beam splitters and/or Mach-Zehnder interferometers. The PIC may be used to create quantum gates, such as the CNOT gate to quantum programming. The PIC may be Quandela's Ascella PIC.

The photonic subsystem may comprise a photon source. The photon source may be Quandela's eDelight device. The photon source may produce single, indistinguishable photons on demand. An indium arsenide/gallium arsenide (InAs/GaAs) quantum dot contained within a chip may emit a photon via photoluminescence after excitation. The chip may be installed in a low-vibration cryogenic chamber, such as a cryostat. Generated photons may be transmitted via an integrated optical fiber. The integrated optical fiber may handle optical excitation and/or photon collection through light polarization.

The quantum system 200 can comprise a QRNG to generate random numbers. The photonic subsystem detailed above may be used as the QRNG. Unlike classical random number generators, which use deterministic algorithms to produce seemingly random numbers, the QRNG exploits the inherent randomness of quantum processes to generate random numbers.

The QRNG may generate random numbers based on a single photon hitting a balanced beam splitter and determining whether the photon was reflected or transmitted by the beam splitter. Each photon may correspond to a random bit. If the photon was reflected a '1' may be output as the random bit, and if the photon was transmitted a '0' may be output as the random bit (or vice-versa). There may be an equal probability that the single photon is reflected or transmitted by the beam splitter.

The quantum system 200 may comprise a device that certifies the randomness of the quantum bytes generated by the quantum system 200. The certification can be performed by checking that the quantum bytes generated by the system are independent of each other. The independence of the bytes may be determined by analyzing whether certain bytes that were generated by the quantum system 200 can be used to determine information about other bytes that have been generated by the quantum system 200. The certification may determine whether there is a uniform distribution of bits having '0' and '1' states. If there is a uniform distribution of '0' and '1' bits this may indicate that there was the same probability that a '0' or '1' would be generated.

The certifying device can implement any methods for determining randomness of the quantum bytes, such as the methods found in ISO/IEC 19790 and/or ISO/IEC 15408.

The photonic subsystem of the quantum system 200 may comprise a solid-state emitter and a glass photonic chip to maintain stability and coherence of the emitted entangled photons.

The random number system 210 may include some or all components of the computing environment 100. The random number system 210 may include a first database 215 and/or a second database 216, each configured for storing a specific type of data, as will be detailed bellow.

The random number system 210 may transmit requests for random byte payloads to the quantum system 200, receive random byte payloads from the quantum system 200, and/or store the random byte payloads. The received random byte payloads may be stored in the second database 216. The servers 220, 221, 222, and/or 223 may transmit requests for random bytes to the random number system 210. The requests may specify a desired length of the random bytes. The random number system 210 may receive the requests. In response to a request, the random number system 210 may retrieve a stored random byte payload and/or prepare a portion of the random byte payload having the desired length. The random number system 210 may transmit the portion of the random byte payload to the servers 220, 221, 222, and/or 223.

The random number system 210 may generate a transaction identification number associated with the request for the random bytes. The transaction identification number may be transmitted to the requester as part of the response. This transaction identification number may be a unique reference to the request for random bytes.

As explained before, the random number system 210 may include multiple databases, such as a first database 215 and a second database 216. The first database 215 may store metadata associated with random byte payloads, such as a Clauser-Horne-Shimony-Holt (CHSH) value for a random byte payload, a minimum entropy value for a random byte payload, a payload identification number for a random byte payload, a transaction identification number associated with one or more random byte payloads, etc. The second database 216 may store random byte payloads. The random byte payloads may be encrypted before being stored in the second database 216. Each stored random byte payload may be indexed by the payload identification number in the second database 216. Each entry in the second database 216 may consist of a key-value pair where the key is a payload number and the value is the encrypted random number payload. The payload identification number may be stored in both the first database 215 and the second database 216 and may be used to retrieve the metadata associated with the random byte payload from the first database 215.

This separation of data storage into multiple databases may reduce the risk of unauthorized correlation between the random byte payload and its metadata, may support access control policies by isolating sensitive components, and/or may enhance fault tolerance by distributing storage responsibilities. This architecture may allow for independent scaling, backup, and/or auditing of each database, which may improve the overall robustness and security of the random number system 210.

The random number system 210 may implement access control mechanisms to regulate and secure access to the first database 215 and/or second database 216. Access to the first database 215 may be granted to system components responsible for auditing, quality assurance, and/or entropy validation. Access to the second database 216 may be restricted to components or users authorized to retrieve and distribute random byte payloads. Role-based access control (RBAC) and/or attribute-based access control (ABAC) policies may be employed to enforce these restrictions. These policies may ensure that only authenticated and authorized entities can access sensitive data. Access events may be logged and/or monitored to support traceability, compliance, and/or intrusion detection. Access tokens and/or cryptographic credentials may be used to authenticate requests to the first database 215 and/or the second database 216.

The first database 215 may store information indicating the total number of the random bytes stored in the second database 216. This information may be maintained as a running total or periodically updated summary. In order to do so, the first database 215 may be in communication with the second database 216 via an intermediary system component. For example, the first database 215 may receive updates regarding the volume of random byte payloads stored in the second database 216. A controller or management system may monitor storage operations and update the first database 215 accordingly, so that the total byte count, of the random byte payload available in the second database 216, remains accurate and up-to-date in the first database 215.

The random number system 210 may use information stored in the first database 215 and/or the second database 216 to monitor the volume of available random bytes. Such tracking supports resource management, usage auditing, and threshold-based alerts. Examples of threshold-based alerts comprise triggering a request for additional random byte payloads when the available supply falls below a predefined limit. Storing information in the first database 215 that indicates the amount of random bytes stored in the second database 216, alongside metadata and identification numbers, may centralize control and oversight functions while maintaining separation from the encrypted random byte payloads stored in the second database 216.

The first database 215 may be a Structured Query Language (SQL) database. SQL databases use structured schemas and rely on SQL for querying data. As a result, the first database 215 may provide efficient querying, indexing, and preserve relational integrity of the metadata associated with random byte payloads, payload identification numbers for random byte payloads, transaction identification numbers associated with the random byte payloads, etc.

The second database 216 may be a NoSQL database. A NoSQL database is a type of database that allows storage and retrieval of data in formats other than tabular relations. NoSQL databases can handle unstructured, semi-structured, or structured data and often use formats like JavaScript Object Notation (JSON), Binary Javascript Object Notation (BSON), or Extensible Markup Language (XML). NoSQL databases may be suited for big data applications, real-time web apps, and/or distributed systems due to their ability to scale horizontally and support high-throughput operations.

Rather than using a first database 215 and a second database 216, the random number system 210 may comprise a single database. The single database may be an SQL database. This single database may store the random byte payload, the payload identification number, the metadata, etc. Consolidating the data into a single database may simplify the architecture of the random number system 210 and/or reduce resource requirements, while still supporting the core functionality of the random number system 210.

It should be noted that, although Figure 2 and related descriptions depict four servers (220, 221, 222, and 223), this representation is provided for illustrative purposes only. The quantum system 200 may be scalable and/or capable of supporting transmission to any number of servers and/or devices.

For clarity and ease of understanding, the random number system 210 is described in the context of handling a single request for random bytes. However, it should be understood that the present technology is not limited to single-request scenarios. In practice, the system is designed to handle a plurality of requests, which may originate from multiple users or from the same user issuing concurrent or successive requests. The architecture may support parallel processing of these requests through asynchronous handling, unique transaction identification, and/or independent metadata and payload management. This may allow the system to scale efficiently and maintain real-time responsiveness even under high request volumes.

### METHODS FOR PROVIDING RANDOM BYTES GENERATED USING THE QRNG

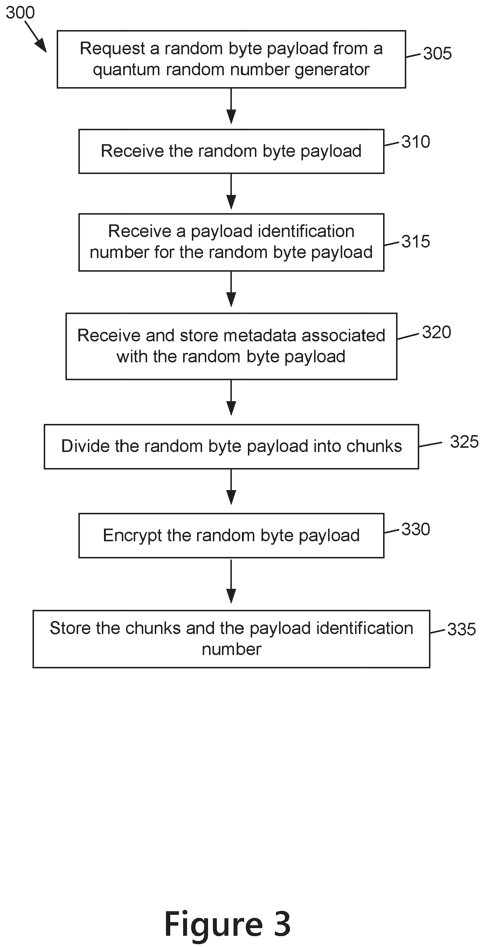

Referring now to Figure 2 and Figure 3 concurrently, a detailed description of the random number system 210 and a corresponding method 300 is provided. Figure 3 is a flow diagram of a method 300 for storing random bytes generated using a quantum random number generator. The method 300 may be executed using the components of the random number system 210. In one or more aspects, method 300 or one or more steps thereof may be performed by a computing system, such as the computing environment 100. Method 300 or one or more steps thereof may be embodied in computer-executable instructions that are stored in a computer-readable medium, such as a non-transitory mass storage device, loaded into memory and executed by a CPU. Method 300 is exemplary, and it should be understood that some steps or portions of steps in the flow diagram may be omitted and/or changed in order.

At step 305, a random byte payload may be requested. A request may be sent to a QRNG or a system containing and/or in communication with a QRNG, such as the quantum system 200. The request may be transmitted via an application programming interface (API). The API may be provided by the random number system 210. The request may include an amount of random bytes that is being requested. The request may be for all random bytes currently available in the QRNG system.

The request for the random byte payload at step 305 may be transmitted periodically. The requests may be transmitted at any frequency. For example, the random number system 210 may be set to request new random byte payloads at fixed intervals, such as every second, every minute, or every hour. Alternatively, the periodicity may be dynamically adjusted in response to real-time factors such as the rate of consumption of random data, system load, and/or specific application demands. A scheduler or timer module within the random number system 210 may be used to trigger these periodic requests. Thresholds may be defined such that a new request is initiated when the available random byte pool falls below a predetermined level. A machine learning algorithm may be used to monitor requests for random bytes and predict upcoming demand for random bytes. If the predicted demand is greater than the availability of random bytes, additional random byte payloads may be requested.

At step 310, a random byte payload may be received. The random byte payload may be received from the quantum system 200. This random byte payload may be received via the API. The random byte payload may include any amount of bytes. The amount of bytes in the random byte payload may be the same as the amount of bytes that were requested.

At step 315, a payload identification number for the random byte payload may be received. The payload identification number may be received from the quantum system 200 using the API. The payload identification number may serve as a unique reference and/or tag for the random byte payload received at step 310. The payload identification number may be used to verify the integrity of the random byte payload, associate the random byte payload with a particular request, determine when the random byte payload was generated, and/or facilitate logging or auditing processes. The payload identification number may be stored in the second database 216 along with the random byte payload. Additionally or alternatively, the payload identification number may be stored in the first database 215.

At step 320, metadata associated with the random byte payload may be received. The random number system 210 may receive and/or store the metadata associated with the random byte payload. The metadata may be received from the QRNG of the quantum system 200. This metadata may include parameters that characterize the quality and/or origin of the generated random numbers. For example, the metadata may comprise a Clauser-Horne-Shimony-Holt (CHSH) value. The CHSH value may represent a measure of quantum entanglement used in the generation process. The CHSH value may serve as an indicator of the quantum nature and non-classical correlations in the random number generation. The metadata may include a minimum entropy value, which quantifies the unpredictability and/or randomness of the generated random byte payload. The metadata may include statistical quality indicators, generation timestamps, source identifiers, entropy estimates, quantum system performance metrics, and/or any other information relating to the generated random byte payload.

The metadata may be stored with the corresponding payload identification number in the first database 215. The random byte payload may be stored with the corresponding payload identification number in the second database 216. The metadata may be used to inform downstream systems and/or applications about the statistical strength and/or trustworthiness of the random byte payload.

At step 325, the random byte payload may be divided into a plurality of chunks. Chunking the random byte payload may provide fine-grained control over the distribution and/or usage of the random byte payload. Each individual chunk may then be sent to a single requester or server. This one-time-use policy may enhance the security and unpredictability of the random byte payload, which may be particularly important in cryptographic or security-sensitive applications. Chunking the random byte payload may prevent duplication or reuse of the same random data across multiple users, thereby reducing the risk of correlation attacks and/or unintended data leakage. A usage log and/or allocation table may be used to track which chunks have been distributed. The usage log and/or allocation table may be consulted to ensure that each chunk is used only once and not reassigned.

The chunking process may facilitate efficient storage, transmission, and/or parallel processing of the payload. The size of each chunk may be predetermined or dynamically configured based on system parameters such as network bandwidth, storage constraints, and/or processing capabilities. For example, chunks may be fixed at sizes such as 32 bytes, 64 bytes, 512 bytes, or 1 kilobyte, or may vary depending on the total size of the payload and/or an intended use of the chunks. Chunking may provide fault tolerance and/or scalability, as individual chunks can be independently transmitted, stored, or reassembled. Metadata may be associated with each chunk to indicate its sequence and/or payload identification number. This metadata may be stored in the first database 215.

At step 330, the random byte payload may be encrypted. Each of the chunks generated at step 325 may be encrypted. Encryption may maintain the confidentiality and/or integrity of the random byte payload during storage and/or transmission. The encryption process may protect the payload from unauthorized access, tampering, and/or interception.

Various types of encryptions may be employed at step 330. The random byte payload may be encrypted using a symmetric encryption algorithm such as Advanced Encryption Standard (AES). The symmetric encryption algorithm may provide efficiency and/or speed in encrypting large volumes of data. The random byte payload may be encrypted using an asymmetric encryption algorithm such as RSA or Elliptic Curve Cryptography (ECC). An asymmetric encryption algorithm may be used to provide secure key exchange or digital signatures. The random byte payload may be encrypted using a hybrid encryption scheme. The hybrid encryption scheme may provide the strengths of both symmetric and asymmetric encryption methods.

At step 335, the encrypted chunks may be stored in a database of the random number system 210. The encrypted chunks may be stored in the second database 216. Each chunk may be stored with an associated payload identification number. The payload identification number may be used to track, retrieve, and/or verify a chunk. This structured storage approach may support efficient indexing, access control, and/or auditability, while allowing the system to manage large volumes of random data in a scalable and organized manner.

The encrypted chunks of the random byte payload may be stored in a standardized encoded format, such as Base64. Encoding the binary data, in Base64 for example, may provide compatibility with systems and databases that are optimized for text-based storage and transmission. The Base64 format is known to be efficient in tern of data compression. Base64 is an easily convertible format, allowing easy transformation between binary and text.

It is to be noted that the present technology is not limited to Base64 format and that any encoding format may be used without departing from the teachings of the present disclosure.

### METHOD FOR PROVIDING RANDOM BYTES

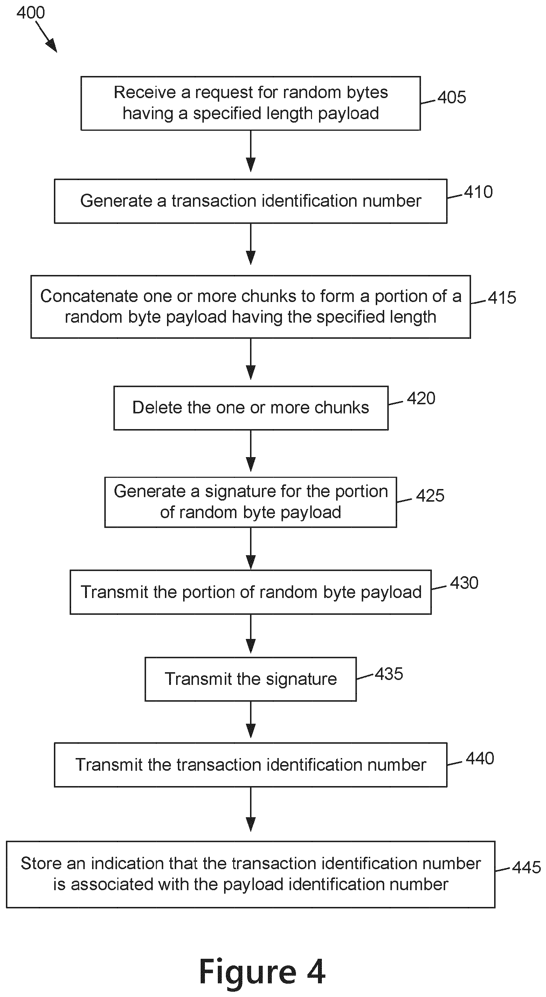

Figure 4 is a flow diagram of a method 400 for providing a plurality of random bytes generated using a quantum random number generator in accordance with various embodiments of the present technology. The method 400 may be executed using some or all of the components of the random number system 210. In one or more aspects, the method 400 or one or more steps thereof may be performed by a computing system, such as the computing environment 100. The method 400 or one or more steps thereof may be embodied in computer-executable instructions that are stored in a computer-readable medium, such as a non-transitory mass storage device, loaded into memory and executed by a CPU. The method 400 is exemplary, and it should be understood that some steps or portions of steps in the flow diagram may be omitted and/or changed in order.

At step 405, a request for random bytes may be received. The request may indicate a specific length of the random bytes that is being requested. The request may be received by the random number system 210. The request may be initiated and/or received via an application programming interface (API).

At step 410, a transaction identification number is generated in response to the request for random bytes. The transaction identification number may be a unique identifier that is associated with the specific received request. The transaction identification number may serve as a reference for tracking the generation, processing, and/or delivery of the corresponding portion of the random byte payload.

At step 415, one or more chunks of random bytes may be concatenated to form a portion of a random byte payload. The one or more chunks of random bytes may be retrieved from the second database 216, decrypted, and concatenated to form the portion of a random byte payload. The portion of the random byte payload may have the specified length or may include more bytes than requested. Although described as a portion of the random byte payload, it should be understood that the chunks may originate from a single random byte payload or from multiple random byte payloads. The chunks may have been generated at a same time or at various different times.

As explained before, each chunk may comprise a fixed-size or variable-size sequence of random bytes. The concatenation process may involve sequentially appending the byte sequences of selected chunks in an order determined by a predefined logic, such as a chunk index, a hash-based ordering, or a metadata-driven mapping. In some embodiments, if the cumulative length of the concatenated chunks is longer than the requested length, then the concatenated chunks may be truncated or otherwise reduced in size to match the requested amount of bytes.

At step 420, the one or more chunks of random bytes that were concatenated to form the portion of a random byte payload at step 415 may be deleted. The one or more chunks used at step 415 may be deleted from the second database 216. This deletion may be performed after concatenating the one or more chunks of random bytes. The deletion may prevent those chunks from being used again.

Deletion of the one or more chunks used at step 415 may enhance data security and privacy because those chunks of random bytes are not retained longer than necessary, thereby reducing the risk of unauthorized access or data leakage.

Deletion of the one or more chunks used at step 415 may also contribute to storage efficiency, freeing up space in the second database 216 and allowing the system to scale more effectively by minimizing long-term storage overhead. By removing portions of payloads that have already been delivered, the random number system 210 may reduce the potential for duplication, replay attacks, or inconsistencies in future transactions involving the same requester or transaction context.

At step 425, a signature may be generated for the portion of the random byte payload generated at step 415. The signature may be a digital signature computed using a cryptographic algorithm applied to the portion of the random byte payload and/or the metadata associated with the portion of the random byte payload. The cryptographic algorithm may be a Rivest-Shamir-Adleman (RSA) algorithm, an elliptic curve digital signature algorithm (ECDSA), an Edwards-curve Digital Signature Algorithm (EdDSA), and/or any other suitable cryptographic algorithm. The signature may be generated using a private key. The private key may be held by the random number system 210. The entity that sent the request received at step 405 may hold a corresponding public key. The public key may be used to verify the authenticity and/or integrity of the portion of random byte payload. The signature may be generated by computing a cryptographic hash (e.g., SHA-256 or SHA-3) of the payload portion, and then applying the private key to the cryptographic hash to produce the signature.

The signature may be used to confirm that the portion of the random byte payload has not been tampered with during transmission or storage, as any modification to the portion of the random byte payload would result in a signature verification failure. The signature may be used to authenticate the origin of the payload, allowing the recipient to confirm that the payload was generated by a trusted source. If the signature cannot be verified using the public key, the recipient will know that the portion of the random byte payload has been tampered with.

The signature may enable non-repudiation, preventing the random number system 210 from denying authorship of the transmitted payload. In some embodiments, the signature may also cover metadata fields such as the payload identification number or timestamp, thereby cryptographically binding the metadata to the random byte payload.

At step 430, the portion of the random byte payload may be transmitted to the requester. At step 435, the transaction identification number may be transmitted to the requester. At step 440, the signature may be transmitted to the requester. The data transmitted at steps 430, 435, and 440 may be transmitted in a single transmission and/or multiple separate transmissions.

At step 445, an indication that the transaction identification number is associated with the payload identification number may be stored in the database. The indication may be stored in the first database 215. The transaction identification number may be associated with the payload identification number in the database such that by providing the transaction identification number, the payload identification number can be retrieved. This indication may comprise a mapping or association record that links the transaction identification number, generated in response to the request for random bytes, with the payload identification number assigned to the random byte payload generated by the quantum system 200. This association may be stored as a document or key-value pair in the first database 215. This association may allow the system to maintain a consistent and traceable link between each request and the specific portion of the random byte payload delivered in response.

Upon receipt of the request for random bytes, a transaction information register related to the request may be created. The transaction information register may be stored in the first database 215. The transaction information register may include the transaction identification number, a client identification number, the specified length of the requested random byte payload, a digital signature corresponding to the random bytes, a creation date, a start time indicating when processing of the request began, and/or any other information related to the request.

Storing this transaction information register in the first database 215 may provide several technical advantages by enabling comprehensive traceability of each request, allowing the random number system 210 to reconstruct the full context of a transaction for auditing, debugging, or compliance purposes. The inclusion of metadata such as the client identification number and signature may support authentication and accountability and may allow each request to be attributed to a specific entity. The creation date and start time fields may enable performance monitoring and latency analysis, which may allow the random number system 210 to track and optimize processing durations.

For clarity and ease of understanding, the method 400 is illustrated in the context of handling a single request for random bytes. However, it should be understood that the present technology is not limited to single-request scenarios. In practice, the system is designed to handle a plurality of requests, which may originate from multiple users or from the same user issuing concurrent or successive requests. The architecture supports parallel processing of these requests through asynchronous handling, unique transaction identification, and independent metadata and payload management. This allows the system to scale efficiently and maintain real-time responsiveness even under high request volumes.

While some of the above-described implementations may have been described and shown with reference to particular acts performed in a particular order, it will be understood that these acts may be combined, sub-divided, or re-ordered without departing from the teachings of the present technology. At least some of the acts may be executed in parallel or in series. Accordingly, the order and grouping of the act is not a limitation of the present technology.

It should be expressly understood that not all technical effects mentioned herein need be enjoyed in each and every embodiment of the present technology.

As used herein, the wording "and/or" is intended to represent an inclusive-or; for example, "X and/or Y" is intended to mean X or Y or both. As a further example, "X, Y, and/or Z" is intended to mean X or Y or Z or any combination thereof.

The foregoing description is intended to be exemplary rather than limiting. Modifications and improvements to the above-described implementations of the present technology may be apparent to those skilled in the art.

## Claims

1. A method for providing a plurality of random bytes generated using a quantum random number generator, the method comprising:
requesting a random byte payload from the quantum random number generator;
receiving the random byte payload and a payload identification number associated with the random byte payload;
storing the random byte payload and the payload identification number in a database;
receiving a request for random bytes having a specified length;
transmitting a portion of the random byte payload having the specified length and a transaction identification number corresponding to the request for the random bytes; and
storing, in the database, an indication that the transaction identification number is associated with the payload identification number.

2. The method of claim 1, wherein the random byte payload is requested prior to receiving the request for the random bytes.

3. The method of claim 1 or claim 2, further comprising encrypting the random byte payload prior to storing the random byte payload.

4. The method of any one of claims 1 to 3, further comprising dividing the random byte payload into a plurality of chunks prior to storing the random byte payload.

5. The method of claim 4, further comprising concatenating one or more chunks of the plurality of chunks to form the portion of the random byte payload having the specified length.

6. The method of any one of claims 1 to 5, further comprising, after transmitting the portion of the random byte payload, deleting the portion of the random byte payload from the database.

7. The method of any one of claims 1 to 6, further comprising:
generating a signature associated with the portion of the random byte payload; and
transmitting the signature with the random byte payload.

8. The method of claim 7, further comprising, after receiving the request for the random bytes:
creating a transaction information register corresponding to the request; and
storing the transaction information register in the database, wherein the transaction information register comprises the transaction identification number, a client identification number, the specified length, or the signature.

9. The method of any one of claims 1 to 8, further comprising receiving, from the quantum random number generator, metadata associated with the random byte payload.

10. The method of claim 9, wherein the metadata comprises: an indication of a minimum entropy value in the quantum random number generator or a value representing a measure of quantum entanglement in the quantum random number generator.

11. The method of claim 10, wherein the database comprises a first database storing the metadata and the payload identification number, and a second database storing the random byte payload and the payload identification number.

12. The method of claim 11, wherein the first database is an SQL database and the second database is a NoSQL database.

13. The method of claim 1, further comprising:
receiving a request comprising the transaction identification number; and
retrieving, from the database and using the transaction identification number, the payload identification number.

14. A non-transitory computer readable medium comprising instructions which upon being executed by at least one processor cause execution of the method according to any one of claims 1 to 13.

15. A system comprising at least one processor and at least one memory device comprising instructions which, upon being executed by the at least one processor, cause execution of the method according to any one of claims 1 to 13.
